# EUROPEAN PATENT SPECIFICATION

(11) **EP 3 473 603 B1**
(45) Date of publication and mention of the grant of the patent: **30.08.2023**
(21) Application number: 18201288.0
(22) Date of filing: 18.10.2018
(51) Int. Cl.: C03B 37/014, C03B 19/14, C03B 20/00

(54) **METHOD OF MAKING HALOGEN DOPED SILICA**
HERSTELLUNGSVERFAHREN FÜR MIT HALOGEN DOTIERTER KIESELSÄURE
PROCÉDÉ DE FABRICATION DE SILICE DOPÉE AVEC UN HALOGÈNE

(30) Priority: 20.10.2017 US 201762574945 P; 09.11.2017 NL 2019876
(43) Date of publication of application: 24.04.2019
(73) Proprietor: Corning Incorporated, Corning, New York 14831 (US)
(72) Inventor: BOOKBINDER, Dana Graig, CORNING, NY New York 14831 (US); DAWES, Steven Bruce, CORNING, NY New York 14831 (US); FIACCO, Richard Michael, CORNING, NY New York 14831 (US); LI, Ming-Jun, CORNING, NY New York (US); TANDON, Pushkar, CORNING, NY New York (US)
(74) Representative: Duxbury, Stephen

(56) References cited:
- EP-A2- 1 431 254
- WO-A1-2016/086013
- WO-A2-2017/003982
- US-A- 5 053 068
- US-A1- 2017 176 673

## Description

This description relates to methods of making optical fiber preforms doped with halogens More particularly, this description relates to core preforms for optical fibers doped with high concentrations of halogen that exhibit low foaming and seed formation during redraw.

Optical fiber performance depends on the ability to control refractive index profiles in low loss fiber media. Most typically, silica glass is used as the base medium for optical fibers used to transmit light over lengths ranging from several meters to hundreds of kilometers. Silica is a preferred base medium because it exhibits low attenuation in the 1300 nm to 1500 nm wavelength range commonly used to transmit optical signals. Attenuation losses in silica-based optical fibers are as low as 0.18 dB/km for typical single-mode optical fiber products. Optical loss is determined by the Rayleigh scattering of the silica-based medium, the concentration of impurities, and wavelength dependent factors such as UV and IR absorption tails.

Optical fibers include a central glass core surrounded by a glass cladding. The base glass medium for the core and cladding is typically silica. To achieve waveguiding, the core is configured to have a higher refractive index than the cladding. The refractive index of silica can be modified by doping. Various dopants are known that either increase or decrease the refractive index of silica relative to undoped silica. In most single mode silica fibers, germanium oxide (GeO₂) is used to dope the core region. Ge doping levels are typically adjusted to provide an increase in the relative refractive index of 0.35%. Although GeO₂ is a relatively expensive dopant, it comprises only about 8% by weight (wt%) of the core region of the fiber and only about 0.5 wt% of the total glass fiber (core + cladding). Germanium doping is also relatively easy to accomplish during laydown of silica preforms and complex refractive index profiles can be made simply by varying the ratio of silicon and germanium precursors supplied to the deposition system during the laydown process (typically an OVD silica soot deposition process). SiCl₄ and GeCl₄ are common precursors for forming Ge-doped silica glass in the preform laydown process. A drawback of using Ge as an index-raising dopant for silica cores is that the presence of Ge increases the Rayleigh scattering of the fiber relative to pure silica fibers. As a result, there is interest in identifying alternate dopants that enable the refractive index profile control of silica needed in optical fibers to achieve fibers with low Rayleigh scattering at reasonable cost.

Two approaches for producing ultralow loss fibers have been have been commercialized. In one approach, a silica core is modified by alkali doping at low concentration (e.g. 0.1 wt% K₂O or less). The alkali doping concentration is designed to be:
(1) high enough to reduce Rayleigh scattering by lowering the viscosity of the glass to a degree sufficient to produce a fiber core with a low fictive temperature; and
(2) sufficiently low to avoid increases in Rayleigh scattering resulting from compositional inhomogeneities.

Since alkali doping at low concentration does not lead to a significant increase in the refractive index of the core relative to undoped silica, the refractive index profile is controlled by doping a surrounding silica cladding with F (fluorine). The presence of fluorine in the silica cladding reduces the refractive index of the cladding relative to undoped silica and provides a mechanism for achieving the core-cladding refractive index contrast needed for effective waveguiding in an optical fiber. The process required to make fibers with alkali-doped cores is complicated and expensive, but attenuation of ~0.15dB/km over selected wavelengths in the 1300 nm - 1500 nm range is possible.

A second approach to making lower loss fiber is to use Cl (chlorine) as a dopant in the core. Since chlorine doping can be accomplished in the consolidation step of preform fabrication, process variables (e.g. preform size, silica precursor) affecting costs associated with core fabrication can be re-optimized. The presence of Cl in the core, even at modest concentrations, does not strongly influence the contribution of compositional inhomogeneity to Rayleigh scattering and fibers with Cl-doped cores can exhibit low losses due to Rayleigh scattering. Regarding control of the refractive index profile, data indicate that the addition of 1 wt% Cl to the core increases the relative refractive index by about 0.08%. Since a higher core index relative to undoped silica is preferred for efficient waveguiding, proper control of the refractive index profile requires doping of the cladding with a dopant that decreases the relative refractive index. Fiber with Cl-doped silica cores typically include silica cladding doped with about 0.5 wt% - 1 wt% F (fluorine) to achieve the proper differential in core-cladding refractive index needed for efficient waveguiding. A fiber with a Cl-doped silica core and an F-doped silica clad exhibits attenuation losses of 0.16 dB/km or lower. Chlorine, however, does not lower the viscosity of silica as much as potassium. Consequently, in order to keep the fictive temperature of the core low and to minimize stresses during draw, the fiber needs to be drawn at very slow rates. The slow draw rates increase the cost of production.

Doping of the silica cladding with F is also a cost-intensive step that would be desirable to avoid. The need for F-doping of the cladding reflects a limitation in the maximum doping concentration of the core silica glass with Cl using conventional Cl doping processes. Under typical commercial process conditions, Cl doping of silica is limited to about 1 wt%. The relative refractive index increases associated with doping of a silica core with 1 wt% Cl is insufficient relative to an undoped silica glass cladding to provide the core-cladding index differential desired for an optical fiber. As a result, the cladding is doped with F to lower the cladding index to achieve the preferred core-cladding index differential. It would be preferable to achieve a core Cl doping concentration high enough to achieve a sufficiently high core-cladding index using undoped silica or lightly F-doped silica for the cladding.

Efforts are underway to further increase Cl doping levels in the core, but have been limited by practical considerations of process equipment. Current preform consolidation processes are run in furnaces that are equipped to supply vapour phase constituents at atmospheric pressure or less. Cl doping during consolidation using SiCl₄, or other silicon chloride species, appears to show a thermodynamic equilibrium that limits the concentration of Cl ([Cl]) incorporated in the core silica to an amount consistent with the empirical relation: [Cl] (wt%) = 2.3 ^{∗} P_{SiCl4}^{1/4}, where P_{SiCl4} is the pressure (in units of atmosphere) of the Cl-doping precursor (SiCl₄) over the glass. As a result, in a process with a maximum pressure of 1.01 bar (1 atmosphere (1 atm)), the highest attainable Cl doping concentration in silica is 2.3 wt%. The relative refractive index increase relative to undoped silica for 2.3 wt% Cl doping is only about Δ = 0.18%, which is insufficient to achieve fibers having adequate effective area and low bend losses when undoped silica is used as the cladding material. F-doping of the cladding is thus needed to increase the core-cladding index differential. Cl doping levels on the order of 3 wt% or higher are needed to achieve a core refractive index sufficiently high to obviate the need for fluorine doping of the cladding and to permit the use of undoped silica as a cladding material. Predicted process pressures for Cl doping on the order of 5.07 bar to 30.40 bar (5 to 30 atmospheres) are needed to achieve Cl doping concentrations that are sufficiently high to permit use of undoped silica as a cladding material.

Where bar is used as the unit for pressure other units could be used with the equivalent amount, for example atmosphere, PSI or pascal.

As Cl doping concentrations of silica increase, it becomes more difficult to insure complete reaction of the Cl doping precursor with silica. During consolidation of Cl-doped silica preforms, for example, unreacted Cl doping precursor becomes encapsulated or entrapped as bubbles (gas phase voids) in silica as the preform sinters and densifies. When the Cl-doped silica preform is intended for use as a preform for the core portion of an optical fiber, it is subjected to a redraw step to narrow and properly size the diameter of the preform to form a core cane. The core cane is subsequently used as s substrate for further deposition of soot to form a cladding or is integrated with a pre-fabricated cladding to form a fiber preform.

The presence of gas phase voids of unreacted Cl doping precursor leads to a deterioration in the core cane product formed in the redraw process. More specifically, the high temperatures (~1800 °C) associated with the redraw process cause evolution of unreacted Cl doping precursor from the consolidated preform. The evolution of Cl doping precursor leads to foaming of the preform, which impairs the optical transparency of both the core cane produced by the redraw process and the optical fiber ultimately drawn from the core cane.

WO 2017/003982 A2, discloses an optical fiber with large effective area, low bending loss and low attenuation. The optical fiber includes a core, an inner cladding region, and an outer cladding region. The core region includes a spatially uniform updopant to minimize low Rayleigh scattering and a relative refractive index and radius configured to provide large effective area. The inner cladding region features a large trench volume to minimize bending loss. The core may be doped with Cl and the inner cladding region may be doped with F.

US 5053068 A discloses a method for producing a glass preform for use in the fabrication of an optical fiber, including the steps of forming a glass soot preform from a glass-forming raw material and heating the soot preform to vitrify it, the soot preform being heated in an atmosphere comprising SiF4 under pressure higher than 1 atm. for a period of time sufficient to add fluorine, between the formation of the soot preform and the vitrification of it, fluorine being added at a high rate and in a large amount.

Bromine doping of silica glass is demonstrated in US2017/176673 A1 whereby bromine doping can be achieved with SiBr4 as a precursor. Bromine doping can occur during heating, consolidation or sintering of a porous silica glass body. Doping concentrations of bromine increase with increasing pressure of the doping precursor and can be modeled with a power law equation in which doping concentration is proportional to the square root of the pressure of the doping precursor. Bromine is an updopant in silica and the relative refractive index of silica increases approximately linearly with doping concentration. Bromine can be used as a dopant for optical fibers and can be incorporated in the core and/or cladding regions. Core doping concentrations of bromine are sufficient to permit use of undoped silica as an inner cladding material in fibers having a trench in the refractive index profile. Co-doping of silica glass with bromine and chlorine is also demonstrated.

WO 2016/086013 A1 discloses producing silica-based soot particles using chemical vapor deposition, the silica-based soot particles having an average particle size of between about 0.05 µm and about 0.25 µm. The method also includes forming a soot compact from the silica-based soot particles and doping the soot compact with a halogen in a closed system by contacting the silica-based soot compact with a halogen containing gas in the closed system at a temperature of less than about 1200°C.

EP1431254 A2 discloses fluorine doping of trench layers in MCVD preforms being enhanced by exposing a silica soot layer, produced by MCVD, to a fluorine-containing gas at high pressure. The high pressure exposure is integrated into the MCVD process.

It is desirable to develop an optical fiber preform having a silica core with high Cl doping that is highly transparent. It is further desirable to develop an optical fiber preform having a silica core with high Cl doping that exhibits minimal foaming and minimal gas phase voids during redraw.

The present disclosure concerns a method of producing halogen doped silica according to the claims.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings are illustrative of selected aspects of the present description, and together with the specification serve to explain principles and operation of methods, products, and compositions embraced by the present description. Features shown in the drawing are illustrative of selected embodiments of the present description and are not necessarily depicted in proper scale.

While the specification concludes with claims particularly pointing out and distinctly claiming the subject matter of the written description, it is believed that the specification will be better understood from the following written description when taken in conjunction with the accompanying drawings, wherein:
- Figure 1 is a schematic depiction of soot preform deposition via an OVD process;
- Figure 2 depicts an apparatus for doping and consolidating a soot preform;
- Figure 3 shows the Cl dopant concentration in silica glass under various doping conditions in an OVD process;
- Figure 4 shows the Br dopant concentration in silica glass under various doping conditions in an OVD process;
- Figure 5 depicts evolution of the structure of a silica soot body during doping with Cl.
- Figure 6 shows a closed-pore Cl-doped silica body;
- Figures 7A-7D show evolution of the structure of a closed-pore body upon thermal treatment;
- Figure 8 shows viscosity data for Cl-doped silica glass;
- Figure 9 shows a closed-pore Cl-doped silica body after thermal treatment; and
- Figure 10 shows core canes redrawn from the closed-pore Cl-doped silica bodies shown in Figs. 6 and 9.

The embodiments set forth in the drawings are illustrative in nature and not intended to be limiting of the scope of the detailed description or claims. Whenever possible, the same reference numeral will be used throughout the drawings to refer to the same or like feature.

The present disclosure is provided as an enabling teaching and can be understood more readily by reference to the following description, drawings, examples, and claims. To this end, those skilled in the relevant art will recognize and appreciate that many changes can be made to the various aspects of the embodiments described herein, while still obtaining the beneficial results. It will also be apparent that some of the desired benefits of the present embodiments can be obtained by selecting some of the features without utilizing other features. Accordingly, those who work in the art will recognize that many modifications and adaptations are possible and can even be desirable in certain circumstances and are a part of the present disclosure. Therefore, it is to be understood that this disclosure is not limited to the specific compositions, articles, devices, and methods disclosed unless otherwise specified. It is also to be understood that the terminology used herein is for the purpose of describing particular aspects only and is not intended to be limiting.

In this specification and in the claims which follow, reference will be made to a number of terms which shall be defined to have the following meanings:
"include", "includes", or like terms means encompassing but not limited to, that is, inclusive and not exclusive.

The term "about" references all terms in the range unless otherwise stated. For example, about 1, 2, or 3 is equivalent to about 1, about 2, or about 3, and further comprises from about 1-3, from about 1-2, and from about 2-3. Specific and preferred values disclosed for compositions, components, ingredients, additives, and like aspects, and ranges thereof, are for illustration only; they do not exclude other defined values or other values within defined ranges. The compositions and methods of the disclosure include those having any value or any combination of the values, specific values, more specific values, and preferred values described herein.

The indefinite article "a" or "an" and its corresponding definite article "the" as used herein means at least one, or one or more, unless specified otherwise.

The term "updopant" refers to an index-raising dopant and the term "downdopant" refers to an index-lowering dopant. When an updopant is incorporated into a base material, the refractive index of the doped material is higher than the refractive index of the base material. Updoped silica, for example, has a higher refractive index than undoped silica. When a downdopant is incorporated into a base material, the refractive index of the doped material is lower than the refractive index of the base material. Updoped silica, for example, has a higher refractive index than undoped silica. Downdoped silica, for example, has a lower refractive index than undoped silica. Updopants for silica include Cl and Ge. Downdopants for silica include B and F. Silica doped with an updopant is referred to as "updoped silica" and silica doped with a downdopant is referred to as "downdoped silica". The process of incorporating an updopant into a base composition is referred to as "updoping" and the process of incorporating a downdopant into a base composition is referred to as "downdoping".

Reference will now be made in detail to illustrative embodiments of the present description.

In a continuous optical fiber manufacturing process, an optical fiber is drawn from a heated preform positioned in a draw furnace. After drawing from the preform, the fiber is passed through a series of processing stages. Processing stages typically include metrology units (e.g. fiber diameter control) to assess quality and other characteristics of the optical fiber, heating stages, a primary coating stage, a secondary coating stage, an ink layer stage, and a spool or other winding stage to receive and store the coated optical fiber.

The properties of the optical fiber are determined to a large degree by the characteristics of the preform. The preform is a dense glass monolith with a diameter of about 27 cm and a length of about 200 cm. The preform includes a central core region surrounded by an annular cladding region. The composition of the core and cladding regions of the preform correspond to the compositions of the core and cladding regions of an optical fiber drawn from the preform. The core is typically silica doped with an updopant and the cladding is typically undoped silica or silica doped with a downdopant. The diameter of the core region of the preform and the thickness of the cladding region of the preform are in proportion to the core diameter and cladding thickness of a fiber drawn from the preform. For single mode fiber, the core diameter is typically ~20 µm and the cladding thickness is typically ~50 µm. The core region and/or cladding region of the preform may include multiple concentric layers that differ in dopant type or dopant concentration to provide optical fibers having a desired refractive index profile. Examples include a cladding region with an inner cladding region, trench region, and/or an outer cladding region.

Silica and doped silica for the core and cladding regions of an optical fiber preform can be produced by methods known in the art. Suitable methods include: flame combustion methods, flame oxidation methods, flame hydrolysis methods, OVD (outside vapour deposition), IVD (inside vapour deposition), VAD (vapour axial deposition), double crucible methods, rod-in-tube procedures, cane-in-soot method, and doped deposited silica processes. A variety of CVD (chemical vapour deposition) and plasma-enhanced CVD processes are known and are suitable for producing silica or doped silica.

Formation of silica occurs through reaction or decomposition of a silica precursor. Suitable precursors for silica include OMCTS (octamethylcyclotetrasiloxane) and SiCl₄. Doping is accomplished with a doping precursor. The doping precursor can be introduced with the silica precursor in the deposition process or used to treat a silica body formed from the silica precursor. Preferred doping precursors include halogen-containing gases. Suitable precursors for doping silica with bromine include SiBr₄. Suitable precursors for doping silica with chlorine include Cl₂, SiCl₄, Si₂Cl₆, Si₂OCl₆, and CCl₄. Suitable precursors for doping silica with fluorine include F₂, CF₄, and SiF₄. The silica precursor and/or doping precursor is preferably provided as a gas to the deposition process. The gas phase silica precursor or gas phase doping precursor is supplied undiluted or in combination with an inert diluent gas (e.g. He, N₂, Ar).

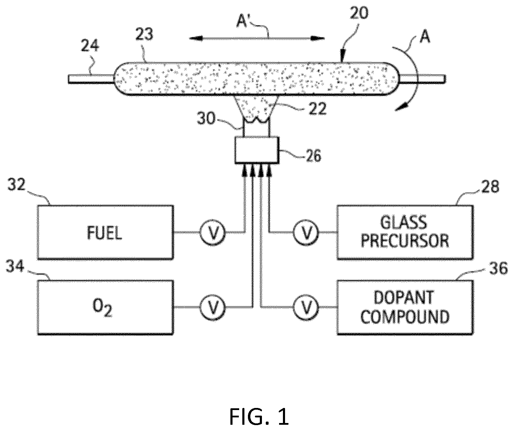

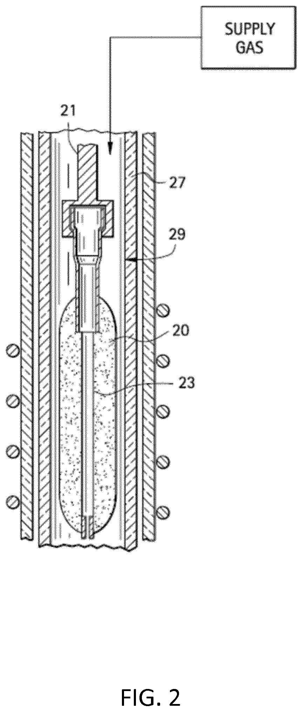

By way of illustration and not intended to be limiting, formation of a silica or doped silica in the form of a core soot body according to the OVD method is illustrated in Figs. 1 and 2. In Fig. 1, core soot body 20 is formed by depositing silica-containing soot 22 onto the outer surface of a rotating and translating mandrel 24. Mandrel 24 is preferably tapered. The soot 22 for core soot body 20 is formed by providing a glass/soot precursor 28 in gaseous form to the flame 30 of a burner 26 to oxidize, hydrolyze, combust, or otherwise react or decompose it. Fuel 32, such as methane (CH₄), and a combustion supporting gas 34, such as oxygen, are provided to the burner 26 and ignited to form the flame 30. Mass flow controllers, labelled V, meter the appropriate amounts of glass/soot precursor 28, fuel 32 and combustion supporting gas 34, all preferably in gaseous form, to the burner 26. The glass/soot precursor 28 is a glass former compound (e.g. silica precursor) and is oxidized in the flame 30 to form a generally cylindrically-shaped core soot region 23. A core soot body comprising silica (doped or undoped) is referred to herein as a silica soot body.

After forming the core soot body, as illustrated in Fig. 2, the core soot body 20 is doped (e.g. with bromine, chlorine, fluorine) and consolidated in consolidation furnace 29 to form a core preform. Prior to consolidation, the bait rod 24 illustrated in Fig. 1 is removed to form a hollow, cylindrical core soot body. During the doping and consolidation process, the core soot body 20 is suspended, for example, inside a pure quartz muffle tube 27 of the furnace 29 by a holding mechanism 21. Prior to or during the consolidation step, the core soot body 20 is exposed to a doping precursor.

The pressure or partial pressure of a doping precursor in a gas phase during doping is at least 1.01 bar (1.0 atm), or at least 2.03 bar (2.0 atm), or at least 5.07 bar (5.0 atm), or at least 10.13 bar (10 atm), or at least 15.20 bar (15 atm), or in the range from 1.01 bar (1.0 atm) - 30.40 bar (30 atm), or in the range from 2.03 bar (2.0 atm) - 25.33 bar (25 atm), or in the range from 3.04 bar (3.0 atm) - 20.27 bar (20 atm), or in the range from 5.07 bar (5.0 atm) - 15.20 bar (15 atm).

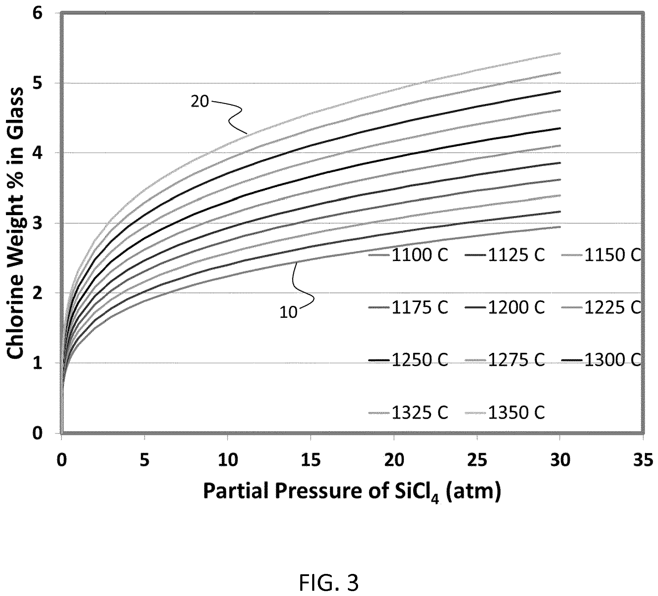

Figure 3 shows the Cl dopant concentration in silica glass made using the doping precursor SiCl₄. The Cl concentration corresponds to the theoretical equilibrium concentration in silica glass after consolidation and is shown as a function of the partial pressure of the doping precursor SiCl₄ for various doping temperatures. Depending on the doping temperature and partial pressure of SiCl₄, Cl concentrations up to about 5.25 wt% are achievable. The Cl concentration in preforms (core preform, cladding preform, or combination thereof) or closed-pore bodies made from silica glass is at least 1.0 wt%, or at least 1.5 wt%, or at least 2.0 wt%, or at least 2.5 wt%, or at least 3.0 wt%, or at least 3.5 wt%, or at least 4.0 wt%, or at least 4.5 wt%, or at least 5.0 wt%, or in the range from 1.5 wt% - 5.5 wt%, or in the range from 2.0 wt% - 5.0 wt%, or in the range from 2.5 wt% - 4.5 wt%, or in the range from 3.0 wt% - 4.0 wt%, or upto about 5.25%.

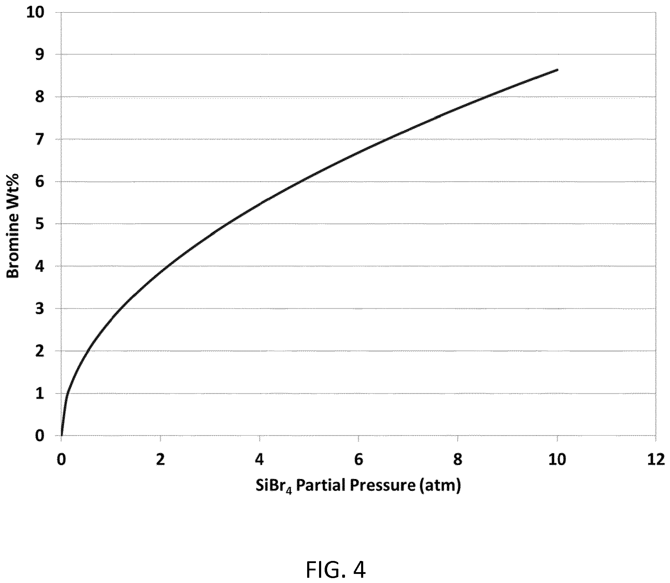

Figure 4 shows the Br dopant concentration in silica glass made by an OVD process using the doping precursor SiBr₄. A downdrive process was used for SiBr₄ doping. The Br concentration corresponds to the concentration in silica glass after consolidation and is shown as a function of the partial pressure of the doping precursor SiBr₄ for a doping temperature near the temperature at which the closed-pore state is achieved (approximately 1330 °C. Doping concentrations up to 8.5 wt% Br are achievable. The Br concentration in preforms (core preform, cladding preform, or combination thereof) or closed-pore bodies made from silica glass is at least 1.0 wt%, or at least 1.5 wt%, or at least 2.0 wt%, or at least 2.5 wt%, or at least 3.0 wt%, or at least 3.5 wt%, or at least 4.0 wt%, or at least 4.5 wt%, or in the range from 1.0 wt% - 8.5 wt%, or in the range from 1.5 wt% - 7.0 wt%, or in the range from 2.0 wt% - 5.5 wt%, or in the range from 2.5 wt% - 4.5 wt%, or upto about 5.25%.

During or after the doping step, the core soot body is sintered to densify the core soot body to form a closed-pore core body. As used herein, a closed-pore state of silica is a state having a density of at least 1.9 g/cm³. A body in a closed-pore state is referred to herein as a closed-pore body. The sintering process is an isothermal process in which the sintering temperature is in the range from 1100 °C to 1600 °C, or in the range from 1000 °C to 1500 °C, or in the range from 1350 °C to 1550 °C, or in the range from 1250 °C to 1450 °C, or in the range from 1380 °C to1500 °C, or in the range from 1280 °C to 1400 °C over a time period in the range from 30 min to 240 min, or in the range from 45 min to 210 min, or in the range from 60 min to 180 min, or in the range from 90 min to 150 min. An isothermal sintering process may be preferred when the doping precursor is supplied as a neat gas or vapour. In another embodiment (not part of the invention), the sintering process is a downdrive process in which a sintering front is established by localized heating and the doping precursor is provided at the sintering front at a concentration (neat or in combination with a diluent) sufficient to accommodate the equilibrium solubility. Depending on the size of the soot body, the thermal conductivity of the soot body, and the heating (downdrive) rate of the soot body, the sintering front may include a radial temperature gradient. That is, at the sinter front, the outer surface of the soot body is exposed to high temperatures and heated and heating of the interior portion follows in time as heat transfers from the outer surface to the interior of the soot body. Sintering transforms the core soot body to a densified, closed-pore state.

The OVD method described above can also be used to form a cladding soot body from a silica precursor and a doping precursor as well as a closed-pore state for the cladding soot body. Multilayer core soot bodies and multilayer cladding soot bodies can be obtained by varying the doping conditions during soot deposition. Doping conditions include time of doping, doping precursor, temperature of doping, and pressure of doping. Layers that differ in thickness, dopant, and doping concentration can be deposited concentrically when forming a core soot body or a cladding soot body.

The optical fiber preform is densified glass that includes a core region and a cladding region. Various methods for forming an optical fiber preform are known. In the OVD method described above, for example, one or more concentric core soot layers can be formed, one or more concentric cladding soot layers can be formed on the outermost of the one or more concentric core layers, and the resulting soot body can be sintered to a closed-pore state to provide a preform with a central core region surrounded by an annular cladding region.

In another method, a core soot body is formed, the core soot body is sintered to a closed-pore state, one or more concentric layers of cladding soot are deposited on the closed-pore core body, and the one or more concentric layers of cladding soot are sintered to a closed-pore state to provide a preform with a central core region surrounded by an annular cladding region.

In a further method, a core soot body is formed and sintered to a closed-pore state. A cladding soot body or a closed-pore cladding body is formed independent of the closed-pore core body. The closed-pore core body is then integrated with the cladding soot body or closed-pore cladding body and consolidated to provide a preform with a central core region surrounded by an annular cladding region. By way of example, a cladding soot body (with one or more layers of one or more compositions) can be formed by soot deposition on a mandrel. Upon completion of soot deposition, the mandrel is removed to provide an annular cladding soot body with a central cavity. A closed-pore core body is then inserted in the central cavity and the resulting assembly is consolidated to densify the soot cladding to form a preform with a central core region surrounded by an annular cladding region.

During preform fabrication or optical fiber manufacture, it is often necessary to heat closed-pore bodies to temperatures above the sintering temperature. Drawing a fiber from a preform, for example, typically requires heating the preform to temperatures of ~1800 °C to soften it so that a fiber can be pulled from the preform. As a second example, formation of a preform from a closed-pore core body often requires sizing the closed-pore core body to a specified diameter. From a process economics standpoint, it is preferable to form a large diameter closed-pore core body and to then reduce the dimensions of the closed-pore core body to the desired diameter. After diameter reduction, the closed-pore core body can be cut to a desired length to form a core cane. The core cane can be used as a substrate for deposition of one or more layers of cladding soot or integrated with a cladding soot body or closed-pore cladding body as described above to form a preform. The process of forming a core cane from a closed-pore core body requires heating the closed-pore core body to a temperature of ~1800 °C to soften it so that it can be pulled and thinned to a specified diameter. The process of forming a core cane from a closed-pore core body is referred to herein as a "redraw process" or "redrawing".

The present inventors have determined that drawing fibers from preforms having a closed-pore core region and a closed-pore cladding region and redrawing closed-pore core bodies to form core canes leads to degradation in the closed-pore region or closed-pore body when the closed-pore region or closed-pore body is made from silica glass with a high halogen doping concentration. Without wishing to be bound by theory, it is believed that the degradation observed during the heating needed for drawing fibers or redrawing core canes leads to evolution (e.g. evaporation, exsolution, or other release from the closed-pore structure) or migration (e.g. diffusion or other motion within the closed-pore structure) of gases trapped in the closed-pore structure and that such evolution or migration leads to formation of gas phase voids in the closed-pore structure or foaming of the closed-pore structure.

The following discussion describes the degradation in the context of redrawing closed-pore core bodies to form core canes for Cl-doped silica glass prepared using SiCl₄ as a doping precursor. It should be understood, however, that the discussion applies analogously to closed-pore bodies generally and in particular to closed-pore core and closed-pore cladding regions of a fiber preform. The discussion further applies to halogen dopants other than Cl and to doping precursors other than SiCl₄.

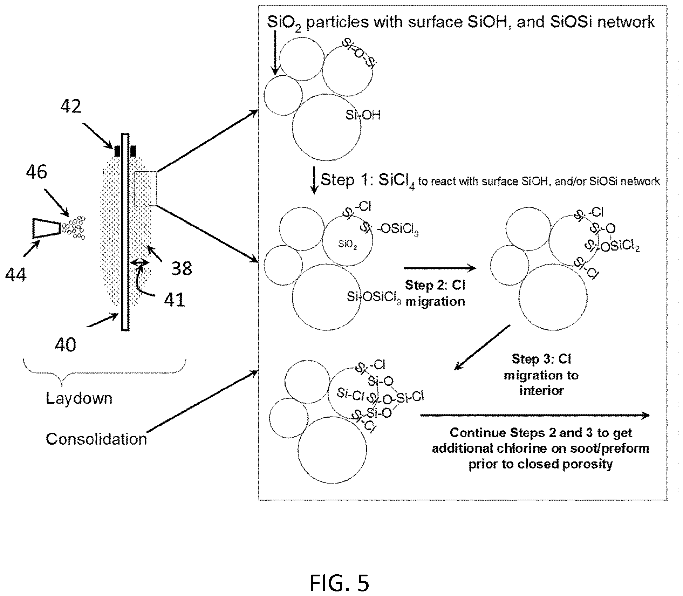

Figure 5 illustrates the process of doping a core soot body formed by an OVD process with Cl using SiCl₄ as a doping precursor. Core soot body 38 is formed on removable mandrel 40, which is held by handle 42, via deposition of silica soot particles 46 produced from a silica precursor combusted by burner 44. Core soot body 38 has thickness 41. The right side of Fig. 5 shows an enlargement of core soot body 38 and the evolution of structure during Cl doping. Core soot body 38 is a porous (open pore) silica body and doping occurs by exposing core soot body 38 to vapour phase SiCl₄. In a first step of the doping process, the SiCl₄ reacts with Si-OH and Si-O-Si groups on the surface of the core soot body to form Si-Cl and Si-O-SiCl₃ bonds on the surface. As doping proceeds, additional Cl bonds form on the surface and Cl migrates along the surface to produce a higher concentration and more uniform coverage of the surface with Cl. At later times in the doping process, Cl migrates from the surface to the interior of the core soot body. The process is continued by providing a fresh supply of SiCl₄ and controlling the doping conditions to achieve a desired doping concentration. Doping is preferably completed while the core soot body remains in an open-pore state.

As pores close the core soot body transforms from an open-pore state to a closed-pore state. In the open-pore state, continuous channels exist within the structure of the core soot body and the doping precursor distributes throughout the structure of the core soot body. As pores close during sintering, the channels narrow and seal to form a series of discrete, non-continuous voids as the closed-pore structure is produced. Due to the high viscosity of the glass, a portion of the vapour phase SiCl₄ gets encapsulated in unreacted form in the structure and becomes trapped in voids or interstitial regions of the closed-pore structure. It is believed that evolution of trapped SiCl₄ at the high temperatures encountered during subsequent redrawing or drawing processes leads to degradation of the closed-pore core body.

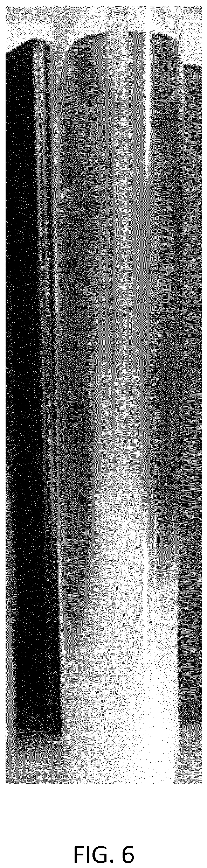

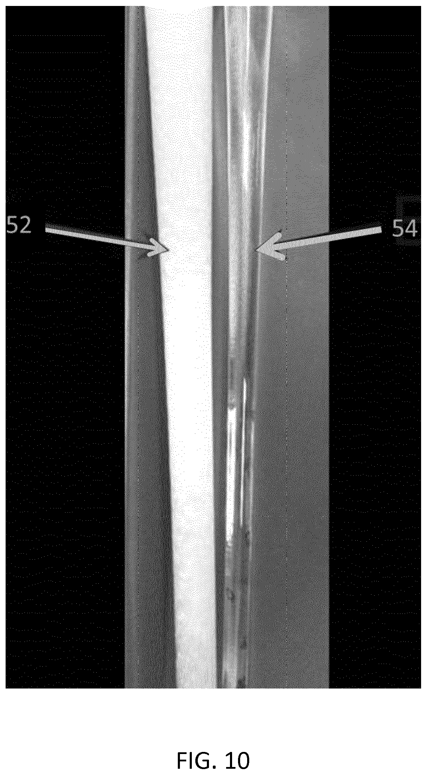

Figure 6 shows a closed-pore core body of Cl-doped silica glass. The closed-pore core body was made in an OVD process using OMCTS as the silica precursor and SiCl₄ as the doping precursor for Cl. A silica soot body was formed on a mandrel and then exposed to SiCl₄ to achieve Cl doping. The doping conditions included a partial pressure of SiCl₄ of 5.8 atm and a hold time of 90 min at 1440 °C. Sintering of the core soot body to a closed-pore state occurred during doping. The closed-pore body was cooled to room temperature. Figure 6 shows the resulting closed-pore body. The Cl concentration of the closed-pore body was 3.3 wt%. Optical inspection of the closed-pore body revealed the presence of gas phase voids throughout the volume of the closed-pore body. The white haze shown in the lower part of the closed-pore body corresponds to regions having a particularly high concentration of voids. When the closed-pore body shown in Fig. 6 was heated to about 1800 °C in a redraw process, extensive foaming was observed and a hazy core cane was produced (see Fig. 10).

The present disclosure provides a method to reduce or eliminate foaming or other degradation of closed-pore bodies that occurs when drawing fibers or redrawing to form core canes. The method recognizes the presence of gas(es) trapped in voids or interstices of closed-pore bodies and recognizes that release of trapped gas(es) from voids or interstices of closed-pore bodies upon heating leads to foaming and other degradation. The present method accordingly is directed to inducing reaction of trapped gas(es) with the glass structure to integrate the trapped gas(es) in the structure of the glass before exposing the closed-pore body to temperatures conducive to liberating trapped gas(es) in a manner that causes foaming or degradation.

In the present invention the method includes thermal treatment of a closed-pore body. The thermal treatment drives reaction of trapped gas-phase doping precursor(s) with the glass structure further to completion. The reaction leads to formation of one or more covalent bonds of trapped doping precursor with the glass and prevents release of the doping precursor upon subsequent processing to draw a fiber or redraw a core cane. As trapped doping precursor reacts, voids become depleted and collapse.

The thermal treatment is applied to a closed-pore body. As noted in an embodiment above, a closed-pore body is formed in an OVD process. A soot body (e.g. core soot body or cladding soot body) is formed and sintered to form a closed-pore body (e.g. closed-pore core body or closed-pore cladding body). In the prior art, the closed-pore body formed upon sintering is directly heated to temperatures well above the sintering temperature (e.g. ~1800 °C) for drawing a fiber or redrawing a core cane. As described in connection with Fig. 6, direct heating leads to foaming and degradation of the closed-pore body. While not wishing to be bound by theory, the present disclosure attributes the foaming and degradation to abrupt release of gas(es) trapped in the structure (voids or interstices) of the closed-pore body. It is believed that heating to the temperatures need to draw a fiber or redraw a core cane from the closed-pore body occurs too rapidly for trapped gas(es), in particular trapped unreacted doping precursor (e.g. SiCl₄), to react with, bond to, or otherwise integrate with the glass structure.

The present thermal treatment of closed-pore bodies furthers the reaction of unreacted gas(es), including trapped unreacted doping precursors, with the glass structure. The reaction stabilizes the trapped doping precursors through bonding to the glass structure, reduces void volume, and reduces foaming and degradation upon subsequent heating to the temperatures required for drawing fibers or redrawing core canes. The thermal treatment is applied to a closed-pore body and occurs at temperatures below temperatures needed to induce foaming or degradation of the closed-pore body. In one embodiment, the closed-pore body is formed by forming a soot body, exposing the soot body to a doping precursor to dope the soot body, and sintering the doped soot body to a closed-pore state. Once in the closed-pore state, the thermal treatment is applied to advance the reaction of trapped doping precursor with the glass structure. When the thermally-treated closed-pore body is subsequently heated to the temperatures required for draw or redraw, little or no foaming occurs and optical fibers and core canes with fewer defects result.

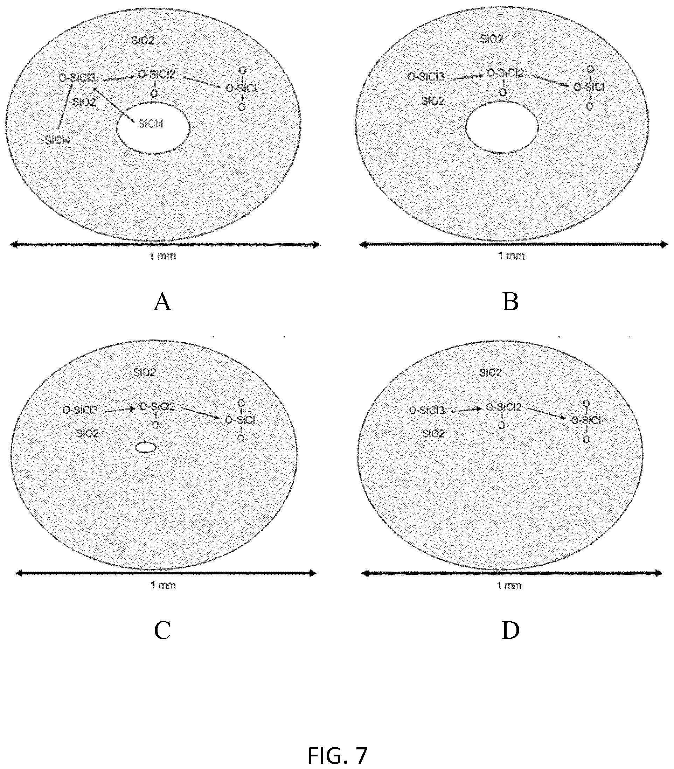

Figures 7A-7D show evolution of the structure of a closed-pore body upon thermal treatment. Figure 7A is a schematic of the structure of a closed-pore body on a length scale of about 1 mm. The closed-pore body is Cl-doped silica glass. The grayscale portion of the structure corresponds to silica glass with Cl dopant integrated into the structure. The white central portion of the structure represents a void that contains unreacted SiCl₄ doping precursor. The SiCl₄ indicated in the glass structure represents interstitial unreacted SiCl₄ doping precursor. Multiple voids and interstices containing SiCl₄ are present throughout the glass structure. Figures 7B-7D show variations in the closed-pore body during thermal treatment. In the early stages of thermal treatment, unreacted SiCl₄ is induced to migrate from void or interstitial positions and react with the glass structure. The reaction leads to formation of covalent bonds with the glass structure as Cl and chlorinated silicon fragments derived from SiCl₄ bond to the glass structure. The degree of chlorination and doping concentration of Cl in the glass structure increases, while voids and interstices become depleted of SiCl₄. Figures 7B-7D show collapse of a void as thermal treatment progresses. The glass structure resulting from the thermal treatment is free or nearly free of voids and unreacted SiCl₄ doping precursor (Fig. 7D). When the thermally treated closed-pore body shown in Fig. 7D is subsequently heated to high temperature for draw or redraw, little or no foaming occurs.

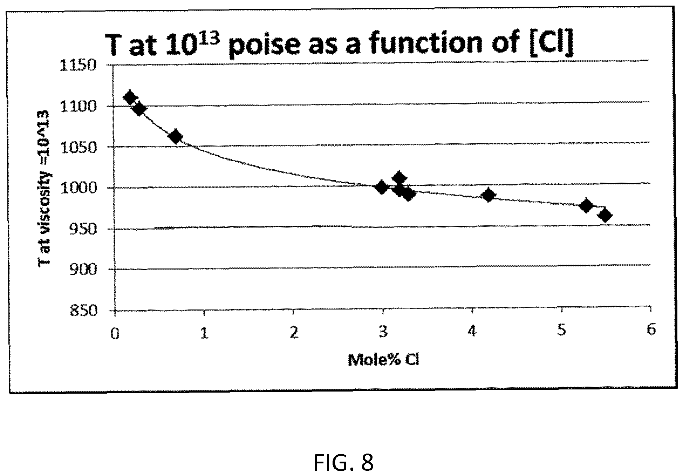

Temperatures of the thermal treatment of the closed-pore body are sufficiently high to facilitate reaction of unreacted doping precursor with the glass structure, but below the temperature at which foaming occurs. It is believed that foaming becomes more problematic as the viscosity of glass decreases. As is known in the art, heating of glass reduces viscosity. When glass containing unreacted gases in voids or interstices is heated and the viscosity of the glass decreases below a foaming threshold, release of the gases causes foaming. Halogen dopants exacerbate foaming because the presence of halogens in the structure of silica glass reduces the viscosity of silica glass. Figure 8, for example, shows the effect of Cl doping on the viscosity of silica glass. The temperature at which the viscosity of Cl-doped silica glass is 10¹³ Poise as a function of Cl doping concentration is shown. The data indicate that as the doping concentration of Cl increases the temperature at which the viscosity is 10¹³ Poise decreases. The data show that the viscosity of Cl-doped silica glass at a particular temperature decreases with increasing Cl doping concentration. Since the severity of foaming increases as glass viscosity decreases, the data indicate that foaming becomes more problematic as the doping concentration of Cl increases. As a result, as Cl doping concentration increases, it becomes necessary to carefully control the thermal environment of the glass to avoid foaming. The thermal treatment described herein is completed at temperatures below temperatures at which the viscosity of the glass is reduced to a degree that leads to appreciable foaming as unreacted doping precursor migrates in the glass.

The thermal treatment described herein is effective in reducing or preventing foaming in silica glass doped with a halogen dopant, where the concentration of the halogen dopant in silica glass is greater than 1.0 wt%, or greater than 1.5 wt%, or greater than 2.0 wt%, or greater than 2.5 wt%, or greater than 3.0 wt%, or in the range from 1.0 wt% - 4.0 wt%, or in the range from 1.5 wt% - 3.5 wt%, or in the range from 1.5 wt% - 3.0 wt%, or in the range from 1.75 wt% - 3.25 wt%, or in the range from 2.0 wt% - 3.0 wt%.

Temperatures of thermal treatment are in the range from 1000 °C - 1500 °C, or in the range from 1000 °C - 1450 °C, or in the range from 1000 °C - 1400 °C, or in the range from 1000 °C - 1350 °C, or in the range from 1000 °C - 1300 °C, or in the range from 1050 °C - 1500 °C, or in the range from 1050 °C - 1450 °C, or in the range from 1050 °C - 1400 °C, or in the range from 1050 °C - 1350 °C, or in the range from 1050 °C - 1300 °C, or in the range from 1100 °C - 1500 °C, or in the range from 1100 °C - 1450 °C, or in the range from 1100 °C - 1400 °C, or in the range from 1100 °C - 1350 °C, or in the range from 1100 °C - 1300 °C, or in the range from 1300 °C - 1500 °C, or in the range from 1300 °C - 1450 °C, or in the range from1300 °C - 1400 °C, or in the range from 1350 °C - 1500 °C, or in the range from 1400 °C - 1500 °C.

The time period of thermal treatment at a thermal treatment temperature is at least 1.0 hour, or at least 2.0 hours, or at least 3.0 hours, or at least 4.0 hours, or at least 6.0 hours, or at least 8.0 hours, or at least 12.0 hours, or at least 16.0 hours, or at least 20.0 hours, or in or in the range from 1.0 hour - 48 hours, or the range from 1.0 hour - 24 hours, or in the range from 1.0 hour - 20 hours, or in the range from 1.0 hour - 16 hours, or in the range from 1.0 hour - 12 hours, or in the range from 1.0 hour - 8.0 hours, or in the range from 2.0 hours - 48 hours, or the range from 2.0 hours - 24 hours, or in the range from 2.0 hours - 20 hours, or in the range from 2.0 hours - 16 hours, or in the range from 2.0 hours - 12 hours, or in the range from 2.0 hours - 8.0 hours, or in the range from 4.0 hours - 48 hours, or the range from 4.0 hours - 24 hours, or in the range from 4.0 hours - 20 hours, or in the range from 4.0 hours - 16 hours, or in the range from 4.0 hours - 12 hours, or in the range from 4.0 hours - 8.0 hours.

In an embodiment, the thermal treatment under the foregoing conditions is followed by secondary thermal processing at a temperature in the range from 1300 °C - 1600 °C, or in the range from 1300 °C - 1550 °C, or in the range from 1300 °C - 1500 °C, or in the range from 1350 °C - 1600 °C, or in the range from 1350 °C - 1550 °C, or range from 1350 °C - 1500 °C, or in the range from 1400 °C - 1600 °C, or in the range from 1400 °C - 1550 °C, or in the range from 1450 °C - 1600 °C, or in the range from 1450 °C - 1550 °C. In an embodiment, commencement of the secondary thermal processing occurs after conclusion of the thermal treatment.

The time period of the secondary thermal process is at least 1.0 hour, or at least 2.0 hours, or at least 3.0 hours, or at least 4.0 hours, or at least 6.0 hours, or at least 8.0 hours, or at least 12.0 hours, or at least 16.0 hours, or at least 20.0 hours, or in or in the range from 1.0 hour - 48 hours, or the range from 1.0 hour - 24 hours, or in the range from 1.0 hour - 20 hours, or in the range from 1.0 hour - 16 hours, or in the range from 1.0 hour - 12 hours, or in the range from 1.0 hour - 8.0 hours, or in the range from 2.0 hours - 48 hours, or the range from 2.0 hours - 24 hours, or in the range from 2.0 hours - 20 hours, or in the range from 2.0 hours - 16 hours, or in the range from 2.0 hours - 12 hours, or in the range from 2.0 hours - 8.0 hours, or in the range from 4.0 hours - 48 hours, or the range from 4.0 hours - 24 hours, or in the range from 4.0 hours - 20 hours, or in the range from 4.0 hours - 16 hours, or in the range from 4.0 hours - 12 hours, or in the range from 4.0 hours - 8.0 hours.

While not wishing to be bound by theory, it is believed that the secondary thermal processing facilitates collapse of voids that remain after completing the thermal treatment. Upon conclusion of the thermal treatment, it is believed that most of the trapped unreacted doping precursor has reacted with the glass structure and covalently bonded. The probability of foaming is accordingly reduced, so higher temperatures are applied to lower glass viscosity to promote rearrangement of the glass structure to close voids.

In the present invention the method includes pressure treatment of a closed-pore body. The pressure treatment drives reaction of trapped gas-phase doping precursor(s) with the glass structure further to completion. The reaction leads to formation of one or more covalent bonds of trapped doping precursor with the glass and prevents release of the doping precursor upon subsequent processing to draw a fiber or redraw a core cane. As trapped doping precursor reacts, voids become depleted and collapse. Application of pressure to the closed-pore body facilitates closure of voids and promotes densification of the glass structure. Pressure is applied mechanically or by exposing the closed-pore body to a pressurized gas. Pressurized gases include Ar, He, N₂, O₂, SiCl₄, Cl₂, inert gases, or combinations thereof.

The pressure of the gas to which the closed-pore body is exposed is at least 1.11 bar (1.1 atm), or at least 2.03 bar (2.0 atm), or at least 5.07 bar (5.0 atm), or at least 10.13 bar (10.0 atm), or at least 20.27 bar (20.0 atm), or at least 50.66 bar (50.0 atm), or at least 75.99 bar (75.0 atm), or at least 101.33 bar (100 atm), or at least 126.66 bar (125 atm), or at least 151.99 bar (150 atm), or at least 177.32 bar (175 atm), or in the range from 1.11 bar (1.1 atm) - 202.65 bar (200 atm), or in the range from 1.52 bar (1.5 atm) - 192.52 bar (190 atm), or in the range from 2.03 bar (2.0 atm) - 182.39 bar (180 atm), or in the range from 5.07 bar (5.0 atm) - 162.12 bar (160 atm), or in the range from 10.13 bar (10.0 atm) - 141.86 bar (140 atm), or in the range from 20.27 bar (20.0 atm) - 121.59 bar (120 atm), or in the range from 40.53 bar (40.0 atm) - 101.33 bar (100 atm).

The time period of the pressure treatment is at least 1.0 hour, or at least 2.0 hours, or at least 3.0 hours, or at least 4.0 hours, or at least 6.0 hours, or at least 8.0 hours, or at least 12.0 hours, or at least 16.0 hours, or at least 20.0 hours, or in or in the range from 1.0 hour - 48 hours, or the range from 1.0 hour - 24 hours, or in the range from 1.0 hour - 20 hours, or in the range from 1.0 hour - 16 hours, or in the range from 1.0 hour - 12 hours, or in the range from 1.0 hour - 8.0 hours, or in the range from 2.0 hours - 48 hours, or the range from 2.0 hours - 24 hours, or in the range from 2.0 hours - 20 hours, or in the range from 2.0 hours - 16 hours, or in the range from 2.0 hours - 12 hours, or in the range from 2.0 hours - 8.0 hours, or in the range from 4.0 hours - 48 hours, or the range from 4.0 hours - 24 hours, or in the range from 4.0 hours - 20 hours, or in the range from 4.0 hours - 16 hours, or in the range from 4.0 hours - 12 hours, or in the range from 4.0 hours - 8.0 hours.

In the invention the closed-pore body is subjected to the thermal treatment (and optionally the secondary thermal processing) as well as to the pressure treatment described herein.

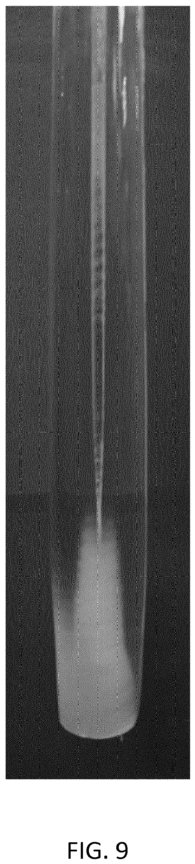

The advantages of the method described herein are illustrated in Figure 9. Figure 9 shows a closed-pore core body of Cl-doped silica glass made in the same manner as described above for the closed-pore core body of Cl-doped silica glass shown in Fig. 6 with further thermal treatment in accordance with the present disclosure. Specifically, the closed-pore core body shown in Fig. 9 was made in an OVD process using OMCTS as the silica precursor and SiCl₄ as the doping precursor for Cl. A silica soot body was formed on a mandrel and then exposed to SiCl₄ to achieve Cl doping. The doping conditions included a partial pressure of SiCl₄ of 5.88 bar (5.8 atm) and a hold time of 90 min at 1440 °C. After doping, the core soot body was sintered to a closed-pore state and subsequently subjected to thermal treatment at 1440 °C for 3 hours under an argon atmosphere maintained at a pressure of 10.13 bar (10 atm). Figure 9 shows the resulting closed-pore body. The Cl concentration of the closed-pore body was 3.3 wt%. Optical inspection of the closed-pore body revealed a significantly reduced concentration of gas phase voids in the closed-pore body of Fig. 9 relative to the closed-pore body of Fig. 6. When the closed-pore body shown in Fig. 9 was heated to about 1800 °C in a redraw process, essentially no foaming was observed and a clear core cane was produced (see Fig. 10).

Figure 10 shows redrawn core canes obtained from the closed-pore body shown in Fig. 6 and the closed-pore body shown in Fig. 9. Core cane 52 was obtained by redrawing the closed-pore body shown in Fig. 6 and core cane 54 was obtained by redrawing the closed-pore body shown in Fig. 9. Core cane 52 exhibits significant foaming and has a hazy appearance, while core cane 54 is optically transparent with minimal foaming. Fibers drawn from a preform containing core cane 54 will have fewer defects and superior optical quality than fibers drawn from a preform containing core cane 52. Thermal treatment and/or secondary thermal processing in accordance with the present disclosure leads to improved preform quality and optical fibers having superior performance.

Commencement of drawing or redrawing preferably occurs after conclusion of the thermal treatment or after conclusion of the secondary thermal processing. The temperature of drawing or redrawing is at least 1650 °C, or at least 1700 °C, or at least 1750 °C, or at least 1800 °C.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or description that the steps are to be limited to a specific order, it is no way intended that any particular order be inferred.

## Claims

1. A method of producing halogen-doped silica comprising the steps of:
- doping a silica soot body with a doping precursor, the doping precursor comprising a halogen wherein the halogen preferably comprises chlorine, preferably wherein the concentration of chlorine in the closed-pore silica soot body is at least 1.0 wt%, or at least 1.5 wt%, or at least 2.0 wt%, or at least 2.5 wt%, or at least 3.0 wt%, or at least 3.5 wt%, or at least 4.0 wt%, or at least 4.5 wt%, or at least 5.0 wt%, or in the range from 1.5 wt% - 5.5 wt%, or in the range from 2.0 wt% - 5.0 wt%, or in the range from 2.5 wt% - 4.5 wt%, or in the range from 3.0 wt% - 4.0 wt%, or up to about 5.25 wt%,
wherein the doping precursor has a pressure, or partial pressure, of at least 1.01 bar, or at least 2.03 bar, or at least 5.07 bar, or at least 10.13 bar, or at least 15.20 bar, or in the range from 1.01 bar - 30.40 bar, or in the range from 2.03 bar - 25.33 bar, or in the range from 3.04 bar - 20.27 bar, or in the range from 5.07 bar - 15.20 bar, preferably the doping precursor has a partial pressure of greater than 2.03 bar,
wherein the doping is carried out at a temperature of 1000 °C - 1500 °C,
- during or after the doping step, sintering the doped silica soot body to form a closed-pore silica soot body comprising silica doped with the halogen, wherein the sintering comprises an isothermal process, wherein a sintering temperature is in the range from 1100 °C - 1600 °C, or in the range from 1000 °C - 1500 °C, or in the range from 1350 °C - 1550 °C, or in the range from 1250 °C - 1450 °C, or in the range from 1380 °C - 1500 °C, or in the range from 1280 °C - 1400 °C, over a time period the range from 30 min - 240 min, or in the range from 45 min - 210 min, or in the range from 60 min - 180 min, or in the range from 90 min - 150 min,
wherein following sintering, the closed-pore silica soot body has a density of at least 1.9 g/cm³,
- subsequently subjecting the sintered closed-pore silica soot body to a secondary pressure and temperature treatment so that on drawing or redrawing of the closed-pore silica soot body foaming and degradation is reduced or eliminated, wherein the secondary pressure treatment comprises exposing the closed-pore silica soot body to a pressurized gas, wherein the pressurized gas is one or more of the following: Ar, He, N₂, O₂, an inert gas, wherein the pressure of the gas to which the closed-pore silica soot body is exposed is at least 1.11 bar, wherein a time period of the pressure treatment is at least 1.0 hour at a secondary temperature in the range from 1000 °C - 1500 °C, or in the range from 1000 °C - 1450 °C, or in the range from 1000 °C - 1400 °C, or in the range from 1000 °C - 1350 °C, or in the range from 1000 °C - 1300 °C, or in the range from 1050 °C - 1500 °C, or in the range from 1050 °C - 1450 °C, or in the range from 1050 °C - 1400 °C, or in the range from 1050 °C - 1350 °C, or in the range from 1050 °C - 1300 °C, or in the range from 1100 °C - 1500 °C, or in the range from 1100 °C - 1450 °C, or in the range from 1100 °C - 1400 °C, or in the range from 1100°C - 1350 °C, or in the range from 1100 °C - 1300 °C, or in the range from 1300 °C - 1500 °C, or in the range from 1300 °C - 1450 °C, or in the range from1300 °C - 1400°C, or in the range from 1350 °C - 1500 °C, or in the range from 1400 °C - 1500 °C.

2. Method according to claim 1, wherein the pressure of the gas to which the closed-pore silica soot body is exposed to during the secondary pressure treatment is at least 2.03 bar, or at least 5.07 bar, or at least 10.13 bar, or at least 20.27 bar, or at least 50.66 bar, or at least 75.99 bar, or at least 101.33 bar, or at least 126.66 bar, or at least 151.99 bar, or at least 177.32 bar, or in the range from 1.11 bar - 202.65 bar, or in the range from 1.52 bar - 192.52 bar, or in the range from 2.03 bar - 182.39 bar, or in the range from 5.07 bar - 162.12 bar, or in the range from 10.13 bar - 141.86 bar, or in the range from 20.27 bar - 121.59 bar, or in the range from 40.53 bar - 101.33 bar.

3. Method according to any of the claims 1 or 2, wherein a time period of the secondary pressure and temperature treatment is at least 2.0 hours, or at least 3.0 hours, or at least 4.0 hours, or at least 6.0 hours, or at least 8.0 hours, or at least 12.0 hours, or at least 16.0 hours, or at least 20.0 hours, or in the range from 1.0 hour - 48 hours, or the range from 1.0 hour - 24 hours, or in the range from 1.0 hour - 20 hours, or in the range from 1.0 hour - 16 hours, or in the range from 1.0 hour - 12 hours, or in the range from 1.0 hour - 8.0 hours, or in the range from 2.0 hours - 48 hours, or the range from 2.0 hours - 24 hours, or in the range from 2.0 hours - 20 hours, or in the range from 2.0 hours - 16 hours, or in the range from 2.0 hours - 12 hours, or in the range from 2.0 hours - 8.0 hours, or in the range from 4.0 hours - 48 hours, or the range from 4.0 hours - 24 hours, or in the range from 4.0 hours - 20 hours, or in the range from 4.0 hours - 16 hours, or in the range from 4.0 hours - 12 hours, or in the range from 4.0 hours - 8.0 hours.

4. Method according to any of the claims 1-3, wherein sintering comprises a downdrive process in which a sintering front is established by localized heating and the doping precursor is provided at the sintering front at a concentration sufficient to accommodate equilibrium solubility.

5. Method according to any of the preceding claims, wherein the doping precursor comprises one or more of the following: SiBr₄, Cl2, SiCl₄, Si₂Cl₆, Si₂OCl₆, and CCl₄, F₂, CF₄, and SiF₄.

6. Method according to any of the preceding claims, wherein the halogen comprises bromine, preferably wherein the concentration of bromine in the closed-pore silica soot body is at least 1.0 wt%, or at least 1.5 wt%, or at least 2.0 wt%, or at least 2.5 wt%, or at least 3.0 wt%, or at least 3.5 wt%, or at least 4.0 wt%, or at least 4.5 wt%, or in the range from 1.0 wt% - 8.5 wt%, or in the range from 1.5 wt% - 7.0 wt%, or in the range from 2.0 wt% - 5.5 wt%, or in the range from 2.5 wt% - 4.5 wt%, or up to about 8.5 wt%.

7. Method according to any of the preceding claims further comprising the step of drawing or redrawing the closed-pore silica soot body after completion of the secondary pressure and thermal treatments, preferably wherein the drawing or redrawing comprises heating the closed-pore silica soot body to a temperature of at least 1700 °C, more preferably wherein the drawing or redrawing comprising heating the closed-pore silica soot body to a temperature of at least 1800 °C.

## Patentansprüche

1. Verfahren zur Herstellung von mit Halogen dotierter Kieselsäure, das die folgenden Schritte umfasst:
- Dotieren eines Kieselsäure-Sootkörpers mit einem Dotierungsvorläufer, wobei der Dotierungsvorläufer ein Halogen umfasst, wobei das Halogen vorzugsweise Chlor umfasst, vorzugsweise wobei die Chlorkonzentration in dem geschlossenporigen Kieselsäure-Sootkörper mindestens 1,0 Gew.-% oder mindestens 1,5 Gew.-% oder mindestens 2,0 Gew.-% oder mindestens 2,5 Gew.-% oder mindestens 3,0 Gew.-% oder mindestens 3,5 Gew.-% oder mindestens 4,0 Gew.-% oder mindestens 4,5 Gew.-% oder mindestens 5,0 Gew.-% ist oder im Bereich von 1,5 Gew.-% bis 5,5 Gew.-% oder im Bereich von 2,0 Gew.-% bis 5,0 Gew.-% oder im Bereich von 2,5 Gew.-% bis 4,5 Gew.-% oder im Bereich von 3,0 Gew.-% bis 4,0 Gew.-% liegt oder bis zu etwa 5,25 Gew.-% beträgt,
wobei der Dotierungsvorläufer einen Druck oder Partialdruck von mindestens 1,01 bar oder mindestens 2,03 bar oder mindestens 5,07 bar oder mindestens 10,13 bar oder mindestens 15,20 bar aufweist, oder im Bereich von 1,01 bar bis 30,40 bar oder im Bereich von 2,03 bar bis 25,33 bar oder im Bereich von 3,04 bar bis 20,27 bar oder im Bereich von 5,07 bar bis 15,20 bar liegt, wobei vorzugsweise der Dotierungsvorläufer einen Partialdruck von mehr als 2,03 bar aufweist,
wobei das Dotieren bei einer Temperatur von 1000 °C bis 1500 °C durchgeführt wird,
- während oder nach dem Dotierungsschritt, Sintern des dotierten Kieselsäure-Sootkörpers zu einem geschlossenporigen Kieselsäure-Sootkörper umfassend mit dem Halogen dotierte Kieselsäure, wobei das Sintern einen isothermen Prozess umfasst, wobei eine Sintertemperatur im Bereich von 1100 °C bis 1600 °C oder im Bereich von 1000 °C bis 1500 °C oder im Bereich von 1350 °C bis 1550 °C oder im Bereich von 1250 °C bis 1450 °C oder im Bereich von 1380 °C bis 1500 °C oder im Bereich von 1280 °C bis 1400 °C liegt, über einen Zeitraum im Bereich von 30 min bis 240 min oder im Bereich von 45 min bis 210 min oder im Bereich von 60 min bis 180 min oder im Bereich von 90 min bis 150 min,
wobei der geschlossenporige Kieselsäure-Sootkörper nach dem Sintern eine Dichte von mindestens 1,9 g/cm³ aufweist,
- anschließendes Unterziehen des gesinterten geschlossenporigen Kieselsäure-Sootkörpers einer sekundären Druck- und Temperaturbehandlung, so dass beim Ziehen oder Nachziehen des geschlossenporigen Kieselsäure-Sootkörpers ein Aufschäumen und eine Degradation verringert oder beseitigt werden, wobei die sekundäre Druckbehandlung das Aussetzen des geschlossenporigen Kieselsäure-Sootkörpers einem unter Druck stehenden Gas umfasst, wobei das unter Druck stehende Gas eines oder mehrere der Folgenden umfasst: Ar, He, N₂, O₂, ein Inertgas, wobei der Druck des Gases, dem der geschlossenporige Kieselsäure-Sootkörper ausgesetzt ist, mindestens 1,11 bar beträgt, wobei ein Zeitraum der Druckbehandlung mindestens 1,0 Stunde beträgt bei einer Sekundärtemperatur im Bereich von 1000 °C bis 1500 °C oder im Bereich von 1000 °C bis 1450 °C oder im Bereich von 1000 °C bis 1400 °C oder im Bereich von 1000 °C bis 1350 °C oder im Bereich von 1000 °C bis 1300 °C oder im Bereich von 1050 °C bis 1500 °C oder im Bereich von 1050 °C bis 1450 °C oder im Bereich von 1050 °C bis 1400 °C oder im Bereich von 1050 °C bis 1350 °C oder im Bereich von 1050 °C bis 1300 °C oder im Bereich von 1100 °C bis 1500 °C oder im Bereich von 1100 °C bis 1450 °C oder im Bereich von 1100 °C bis 1400 °C oder im Bereich von 1100 °C bis 1350 °C oder im Bereich von 1100 °C bis 1300 °C oder im Bereich von 1300 °C bis 1500 °C oder im Bereich von 1300 °C bis 1450 °C oder im Bereich von 1300 °C bis 1400 °C oder im Bereich von 1350 °C bis 1500 °C oder im Bereich von 1400 °C bis 1500 °C liegt.

2. Verfahren nach Anspruch 1, wobei der Druck des Gases, dem der geschlossenporige Kieselsäure-Sootkörper während der sekundären Druckbehandlung ausgesetzt wird, mindestens 2,03 bar oder mindestens 5,07 bar oder mindestens 10,13 bar oder mindestens 20,27 bar oder mindestens 50,66 bar oder mindestens 75,99 bar oder mindestens 101,33 bar oder mindestens 126,66 bar oder mindestens 151,99 bar oder mindestens 177,32 bar beträgt oder im Bereich von 1,11 bar bis 202,65 bar oder im Bereich von 1,52 bar bis 192,52 bar oder im Bereich von 2,03 bar bis 182,39 bar oder im Bereich von 5,07 bar bis 162,12 bar oder im Bereich von 10,13 bar bis 141,86 bar oder im Bereich von 20,27 bar bis 121,59 bar oder im Bereich von 40,53 bar bis 101,33 bar liegt.

3. Verfahren nach einem der Ansprüche 1 und 2, wobei ein Zeitraum der sekundären Druck- und Temperaturbehandlung mindestens 2,0 Stunden oder mindestens 3,0 Stunden oder mindestens 4,0 Stunden oder mindestens 6,0 Stunden oder mindestens 8,0 Stunden oder mindestens 12,0 Stunden oder mindestens 16,0 Stunden oder mindestens 20,0 Stunden beträgt, oder im Bereich von 1,0 Stunde bis 48 Stunden oder im Bereich von 1,0 Stunde bis 24 Stunden oder im Bereich von 1,0 Stunde bis 20 Stunden oder im Bereich von 1,0 Stunde bis 16 Stunden oder im Bereich von 1,0 Stunde bis 12 Stunden, oder im Bereich von 1,0 Stunde bis 8,0 Stunden oder im Bereich von 2,0 Stunden bis 48 Stunden oder im Bereich von 2,0 Stunden bis 24 Stunden oder im Bereich von 2,0 Stunden bis 20 Stunden oder im Bereich von 2,0 Stunden bis 16 Stunden oder im Bereich von 2,0 Stunden bis 12 Stunden oder im Bereich von 2,0 Stunden bis 8,0 Stunden oder im Bereich von 4,0 Stunden bis 48 Stunden, oder im Bereich von 4,0 Stunden bis 24 Stunden oder im Bereich von 4,0 Stunden bis 20 Stunden oder im Bereich von 4,0 Stunden bis 16 Stunden, oder im Bereich von 4,0 Stunden bis 12 Stunden oder im Bereich von 4,0 Stunden bis 8,0 Stunden liegt.

4. Verfahren nach einem der Ansprüche 1 bis 3, wobei das Sintern einen Downdrive-Prozess umfasst, bei dem eine Sinterfront durch lokalisiertes Erhitzen aufgebaut wird und der Dotierungsvorläufer an der Sinterfront in einer Konzentration bereitgestellt wird, die ausreicht, um eine Gleichgewichtslöslichkeit zu erreichen.

5. Verfahren nach einem der vorhergehenden Ansprüche, wobei der Dotierungsvorläufer eines oder mehrere der Folgenden umfasst: SiBr₄, Cl₂, SiCl₄, Si₂Cl₆, Si₂OCl₆, und CCl₄, F₂, CF₄, und SiF₄.

6. Verfahren nach einem der vorhergehenden Ansprüche, wobei das Halogen Brom umfasst, wobei vorzugsweise die Bromkonzentration in dem geschlossenporigen Kieselsäure-Sootkörper mindestens 1,0 Gew.-% oder mindestens 1,5 Gew.-% oder mindestens 2,0 Gew.-% oder mindestens 2,5 Gew.-%, oder mindestens 3,0 Gew.-% oder mindestens 3,5 Gew.-% oder mindestens 4,0 Gew.-% oder mindestens 4,5 Gew.-% beträgt oder im Bereich von 1,0 Gew.-% bis 8,5 Gew.-% oder im Bereich von 1,5 Gew.-% bis 7,0 Gew.-% oder im Bereich von 2,0 Gew.-% bis 5,5 Gew.-% oder im Bereich von 2,5 Gew.-% bis 4,5 Gew.-% liegt oder bis zu etwa 8,5 Gew.-%. beträgt.

7. Verfahren nach einem der vorhergehenden Ansprüche, ferner umfassend den Schritt des Ziehens oder Nachziehens des geschlossenporigen Kieselsäure-Sootkörpers nach Abschluss der sekundären Druck- und Wärmebehandlungen, vorzugsweise wobei das Ziehen oder Nachziehen das Erhitzen des geschlossenporigen Kieselsäure-Sootkörpers auf eine Temperatur von mindestens 1700 °C umfasst, wobei das Ziehen oder Nachziehen besonders bevorzugt das Erhitzen des geschlossenporigen Kieselsäure-Sootkörpers auf eine Temperatur von mindestens 1800 °C umfasst.

## Revendications

1. Procédé de production de silice dopée avec un halogène comprenant les étapes consistant à :
- doper un corps en suie de silice avec un précurseur de dopage, le précurseur de dopage comprenant un halogène, ledit halogène comprenant de préférence le chlore, la concentration en chlore du corps en suie de silice à pores fermés étant de préférence d'au moins 1,0 % en poids, ou au moins 1,5 % en poids, ou au moins 2,0 % en poids, ou au moins 2,5 % en poids, ou au moins 3,0 % en poids, ou au moins 3,5 % en poids, ou au moins 4,0 % en poids, ou au moins 4,5 % en poids, ou au moins 5,0 % en poids, ou étant située dans la plage de 1,5 % en poids à 5,5 % en poids, ou dans la plage de 2,0 % en poids à 5,0 % en poids, ou dans la plage de 2,5 % en poids à 4,5 % en poids, ou dans la plage de 3,0 % en poids à 4,0 % en poids, ou allant jusqu'à environ 5,25 % en poids,
ledit précurseur de dopage ayant une pression, ou pression partielle, d'au moins 1,01 bar, ou au moins 2,03 bar, ou au moins 5,07 bar, ou au moins 10,13 bar, ou au moins 15,20 bar, ou située dans la plage de 1,01 bar à 30,40 bar, ou dans la plage de 2,03 bar à 25,33 bar, ou dans la plage de 3,04 bar à 20,27 bar, ou dans la plage de 5,07 bar à 15,20 bar, le précurseur de dopage ayant de préférence une pression partielle supérieure à 2,03 bar,
ledit dopage s'effectuant à une température de 1000 °C à 1500 °C ;
- pendant ou après l'étape de dopage, fritter le corps en suie de silice dopé pour former un corps en suie de silice à pores fermés comprenant de la silice dopée avec l'halogène, ledit frittage comprenant un processus isotherme, la température dudit frittage se situant dans la plage de 1100 °C à 1600 °C, ou dans la plage de 1000 °C à 1500 °C, ou dans la plage de 1350 °C à 1550 °C, ou dans la plage de 1250 °C à 1450 °C, ou dans la plage de 1380 °C à 1500 °C, ou dans la plage de 1280 °C à 1400 °C, sur une durée située dans la plage de 30 min à 240 min, ou dans la plage de 45 min à 210 min, ou dans la plage de 60 min à 180 min, ou dans la plage de 90 min à 150 min,
le corps en suie de silice à pores fermés présentant, à la suite du frittage, une densité d'au moins 1,9 g/cm³ ;
- soumettre ensuite le corps fritté en suie de silice à pores fermés à un traitement secondaire par pression et température de façon à réduire ou éliminer le moussage et la dégradation lors de l'étirage ou du réétirage du corps fritté en suie de silice à pores fermés, ledit traitement secondaire par pression comprenant l'exposition du corps en suie de silice à pores fermés à un gaz sous pression, ledit gaz sous pression comportant l'un ou plusieurs des suivants : Ar, He, N₂, O₂, un gaz inerte, ladite pression du gaz auquel le corps en suie de silice à pores fermés est exposé étant d'au moins 1,11 bar, la durée du traitement par pression étant d'au moins 1,0 heure à une température secondaire située dans la plage de 1000 °C à 1500 °C, ou dans la plage de 1000 °C à 1450 °C, ou dans la plage de 1000 °C à 1400 °C, ou dans la plage de 1000 °C à 1350 °C, ou dans la plage de 1000 °C à 1300 °C, ou dans la plage de 1050 °C à 1500 °C, ou dans la plage de 1050 °C à 1450 °C, ou dans la plage de 1050 °C à 1400 °C, ou dans la plage de 1050 °C à 1350 °C, ou dans la plage de 1050 °C à 1300 °C, ou dans la plage de 1100 °C à 1500 °C, ou dans la plage de 1100 °C à 1450 °C, ou dans la plage de 1100 °C à 1400 °C, ou dans la plage de 1100 °C à 1350 °C, ou dans la plage de 1100 °C à 1300 °C, ou dans la plage de 1300 °C à 1500 °C, ou dans la plage de 1300 °C à 1450 °C, ou dans la plage de 1300 °C à 1400 °C, ou dans la plage de 1350 °C à 1500 °C, ou dans la plage de 1400 °C à 1500 °C.

2. Procédé selon la revendication 1, dans lequel la pression du gaz auquel le corps en suie de silice à pores fermés est exposé au cours du traitement secondaire par pression est d'au moins 2,03 bar, ou au moins 5,07 bar, ou au moins 10,13 bar, ou au moins 20,27 bar, ou au moins 50,66 bar, ou au moins 75,99 bar, ou au moins 101,33 bar, ou au moins 126,66 bar, ou au moins 151,99 bar, ou au moins 177,32 bar, ou située dans la plage de 1,11 bar à 202,65 bar, ou dans la plage de 1,52 bar à 192,52 bar, ou dans la plage de 2,03 bar à 182,39 bar, ou dans la plage de 5,07 bar à 162,12 bar, ou dans la plage de 10,13 bar à 141,86 bar, ou dans la plage de 20,27 bar à 121,59 bar, ou dans la plage de 40,53 bar à 101,33 bar.

3. Procédé selon l'une quelconque des revendications 1 et 2, dans lequel la durée du traitement secondaire par pression et température est d'au moins 2,0 heures, ou au moins 3,0 heures, ou au moins 4,0 heures, ou au moins 6,0 heures, ou au moins 8,0 heures, ou au moins 12,0 heures, ou au moins 16,0 heures, ou au moins 20,0 heures, ou située dans la plage de 1,0 heure à 48 heures, ou dans la plage de 1,0 heure à 24 heures, ou dans la plage de 1,0 heure à 20 heures, ou dans la plage de 1,0 heure à 16 heures, ou dans la plage de 1,0 heure à 12 heures, ou dans la plage de 1,0 heure à 8,0 heures, ou dans la plage de 2,0 heures à 48 heures, ou dans la plage de 2,0 heures à 24 heures, ou dans la plage de 2,0 heures à 20 heures, ou dans la plage de 2,0 heures à 16 heures, ou dans la plage de 2,0 heures à 12 heures, ou dans la plage de 2,0 heures à 8,0 heures, ou dans la plage de 4,0 heures à 48 heures, ou dans la plage de 4,0 heures à 24 heures, ou dans la plage de 4,0 heures à 20 heures, ou dans la plage de 4,0 heures à 16 heures, ou dans la plage de 4,0 heures à 12 heures, ou dans la plage de 4,0 heures à 8,0 heures.

4. Procédé selon l'une quelconque des revendications 1 à 3, dans lequel le frittage comprend un processus de frittage progressif (downdrive) dans lequel un front de frittage est établi par chauffage localisé et le précurseur de dopage est fourni au niveau du front de frittage selon une concentration suffisante pour permettre la solubilité à l'équilibre.

5. Procédé selon l'une quelconque des revendications précédentes, dans lequel le précurseur de dopage comprend l'un ou plusieurs des suivants : SiBr₄, Cl₂, SiCl₄, Si₂Cl₆, Si₂OCl₆, et CCl₄, F₂, CF₄, et SiF₄.

6. Procédé selon l'une quelconque des revendications précédentes, dans lequel l'halogène comprend le brome, ladite concentration en brome du corps en suie de silice à pores fermés étant de préférence d'au moins 1,0 % en poids, ou au moins 1,5 % en poids, ou au moins 2,0 % en poids, ou au moins 2,5 % en poids, ou au moins 3,0 % en poids, ou au moins 3,5 % en poids, ou au moins 4,0 % en poids, ou au moins 4,5 % en poids, ou située dans la plage de 1,0 % en poids à 8,5 % en poids, ou dans la plage de 1,5 % en poids à 7,0 % en poids, ou dans la plage de 2,0 % en poids à 5,5 % en poids, ou dans la plage de 2,5 % en poids à 4,5 % en poids, ou allant jusqu'à environ 8,5 % en poids.

7. Procédé selon l'une quelconque des revendications précédentes, comprenant en outre l'étape consistant à étirer ou réétirer le corps en suie de silice à pores fermés au terme des traitements secondaires thermique et par pression, ledit étirage et réétirage comprenant de préférence le chauffage du corps en suie de silice à pores fermés à une température d'au moins 1700 °C, ledit étirage et réétirage comprenant plus préférablement le chauffage du corps en suie de silice à pores fermés à une température d'au moins 1800 °C.
